# EUROPÄISCHE PATENTSCHRIFT

(11) **EP 2 593 683 B1**
(45) Veröffentlichungstag und Bekanntmachung des Hinweises auf die Patenterteilung: **11.06.2014**
(21) Anmeldenummer: 11733828.5
(22) Anmeldetag: 08.07.2011
(51) Int. Cl.: F16B 25/00

(54) **SELBSTZENTRIERENDE SCHRAUBE**
SELF-CENTRING SCREW
VIS AUTOCENTREUSE

(30) Priorität: 15.07.2010 DE 102010031410
(43) Veröffentlichungstag der Anmeldung: 22.05.2013
(73) Patentinhaber: TOGE-Dübel A. Gerhard KG, 90431 Nürnberg (DE)
(72) Erfinder: GERHARD, Andreas, 90427 Nürnberg (DE)
(74) Vertreter: Rau, Schneck & Hübner Patentanwälte Rechtsanwälte PartGmbB
(86) Internationale Anmeldenummer: PCT/EP2011/061580
(87) Internationale Veröffentlichungsnummer: WO 2012/007368

(56) Entgegenhaltungen:
- DE-A1- 10 243 537
- DE-U1- 29 917 000
- JP-A- 2008 291 870
- US-A- 5 190 426

## Beschreibung

Die Erfindung betrifft eine selbstzentrierende Schraube zum Einschrauben in ein Bohrloch in einen harten Werkstoff, insbesondere Beton.

Die DE 299 17 000 U1 offenbart eine gewindeformende Schraube zum direkten Einschrauben in eine Bohrung, die in Beton, Mauerwerk oder dergleichen eingebracht ist. Eine derartige Schraube umfasst einen zylindrischen Kern, ein einstückig mit dem Kern ausgebildetes Außen-Gewinde und ein am Kern angeordnetes Drehmoment-Übertragungs-Mittel. Weiterhin sind an dem Kern Stütz-Elemente zum Abstützen der Schraube in dem Bohrloch während des Einschraubens vorgesehen.

Befestigungsmittel für einen harten Werkstoff sind beispielsweise in Form von Betonschrauben durch offenkundige Vorbenutzung bekannt. Derartige Schrauben weisen einen zylindrischen Kern mit einem Kern-Durchmesser und einem Einführende auf, dessen Durchmesser gegenüber dem Kern-Durchmesser reduziert ist. Beim Einführen der Schraube mit dem Einführende in ein Bohrloch kommt es zum Anlegen eines Außen-Gewindes der Schraube an einer Innenwand des Bohrlochs in einem Bereich eines Gewindeanfangs. Beim Drehen der Schraube in einer Einschraub-Richtung kann es passieren, dass die Schraube beim Kontakt des Außen-Gewindes mit der Innenwand des Bohrlochs um eine Mittel-Längs-Achse der Schraube kippt. Dadurch kann das Gewinde der Schraube nicht in das Bohrloch eingedreht werden. Die Schraube fasst nicht. Ganz im Gegenteil kommt es zu einem Durchdrehen und zu einem Beschädigen der Schraube sowie einem Ausfräsen des Bohrlochbeginns. Sowohl die Schraube als auch das Bohrloch können dadurch unbrauchbar sein. Das Problem des Einschraubens mit einer derartigen Schraube wird zusätzlich dadurch erschwert, dass oftmals harte Zuschlagsstoffe wie Kiesel und/oder Armierungen in dem harten Werkstoff vorliegen.

Der Erfindung liegt die Aufgabe zugrunde, eine Schraube zum Einschrauben in ein Bohrloch in einen harten Werkstoff, insbesondere Beton, derart weiterzuentwickeln, dass der Einschraubvorgang verbessert ist.

Die Aufgabe wird durch die Merkmale des Anspruchs 1 gelöst. Der Kern der Erfindung besteht darin, dass die Schraube mindestens ein Stütz-Element zum Abstützen der Schraube in dem Bohrloch während des Einschraubens aufweist. Dadurch wird verhindert, dass beim Einschrauben der Schraube diese um die Mittel-Längs-Achse kippt. Das mindestens eine Stütz-Element wirkt also als Zentrierhilfe. Die erfindungsgemäße Schraube ist selbstzentrierend während des Einschraubvorgangs. Die erfindungsgemäße Schraube umfasst einen zylindrischen Kern mit einem Einführende, einem diesem gegenüberliegenden Außenende, einem Kern-Durchmesser, einer Einschraub-Richtung und einer dazu parallelen Mittel-Längs-Achse. Weiterhin ist ein mit dem Kern einstückig ausgebildetes, sich entlang eines Gewinde-Abschnitts erstreckendes Außen-Gewinde zum Einschrauben desselben in den Werkstoff vorgesehen. Das Außen-Gewinde weist einen Gewinde-Durchmesser, einen am Einführende angeordneten Gewindeanfang und mindestens ein Schneid-Element zum Einschneiden des Außen-Gewindes in den Werkstoff auf. Zum Einschrauben der Schraube in den Werkstoff ist an dem Kern ein Drehmoment-Übertragungs-Mittel zur Übertragung eines Einschraub-Drehmoments von einem Einschraub-Werkzeug auf den Kern der Schraube angeordnet. Das mindestens eine Stütz-Element ist im Bereich des Gewindeanfangs angeordnet und bezogen auf die Mittel-Längs-Achse dem mindestens einen Schneid-Element diametral gegenüberliegend an dem Kern angeordnet. Dadurch ist gewährleistet, dass beim Eingreifen des Schneid-Elements in den harten Werkstoff die Schraube an einer dem Schneid-Element gegenüberliegenden Seite in dem Bohrloch abgestützt und somit sicher geführt ist. Das mindestens eine Stütz-Element kann als eine von dem Kern hervorstehende Erhebung ausgeführt sein. Insbesondere in dem Fall, dass es sich um eine sprödbruchfreie Schraube handelt, kann das mindestens eine Stütz-Element als aufgeschweißter Schneidstift ausgeführt sein. Für den Fall, dass es sich um eine Edelstahlschraube handelt, können die besonders hart ausgeführten Schneidstifte in dafür vorgesehenen Bohrungen in der Schraube verankert sein. Es ist auch denkbar, auf den Kern der Schraube ein spitz zulaufendes Zwischengewinde, das dem Außen-Gewinde diametral gegenüberliegend angeordnet ist, vorzusehen. Das mindestens eine Stütz-Element kann gemäß einer bevorzugten Ausführungsform entlang einer Schraubenlinie an dem Kern angeordnet sein, wobei die Schraubenlinie höchstens einen Gewindegang, insbesondere höchstens 80% eines Gewindegangs und insbesondere höchstens 50% eines Gewindegangs umfasst. In Folge der schraubenlinienförmigen Anordnung der Stütz-Elemente ist gewährleistet, dass entlang eines größeren Einschraubwinkelbereichs eine Abstützung der Schraube in dem Bohrloch erfolgt. Durch eine Begrenzung der Höhe der Schraubenlinie kann vermieden werden, dass der Eindrehwiderstand der Schraube mit steigender Einschraubtiefe unnötig ansteigt. Somit kann verhindert werden, dass in Folge eines unzulässig hohen Eindrehwiderstands ein Kraftbedarf zum Einschrauben überproportional ansteigt und beispielsweise die Schraube in dem Bohrloch abgedreht wird. Weiterhin wird verhindert, dass ein zwischen den Traggewinden in dem Bohrloch verbleibender Steg beschädigt wird und daraus ein Tragfähigkeitsverlust bei einer Zugbelastung der eingeschraubten Schraube auftreten könnte. Es ist insbesondere von Vorteil, wenn die Schraubenlinie und das Außen-Gewinde identische Gewindesteigungen aufweisen, sodass in Folge des Einschraubens die Mittel-Längs-Achse der Schraube auch mit zunehmender Einschraubtiefe im Bohrloch zentriert ist. Die Schraube kann an einem Schneid-Element einen Schneid-Element-Durchmesser aufweisen, der größer ist als der Gewinde-Durchmesser. Entsprechend kann die Schraube an dem mindestens einen Stütz-Element einen Stütz-Element-Durchmesser aufweisen, der kleiner ist als der Gewinde-Durchmesser. Dadurch, dass der Schneid-Element-Durchmesser größer ist als der Gewinde-Durchmesser wird das Einschneiden der Schraube in den harten Werkstoff erleichtert. Dadurch, dass der Stütz-Element-Durchmesser kleiner ist als der Gewinde-Durchmesser ist gewährleist, dass ein in dem Bohrloch verbleibender Betonsteg zwischen dem Trag-Gewinde nicht geschädigt wird und somit die Tragfähigkeit der in das Bohrloch eingeschraubten Schraube verbessert ist.

Weitere vorteilhafte Ausgestaltungen der Erfindung ergeben sich aus den Unteransprüchen.

Zusätzliche Merkmale und Einzelheiten der Erfindung ergeben sich aus der nachfolgenden Beschreibung eines Ausführungsbeispiels anhand der Zeichnung. Es zeigen:
- Fig. 1: eine teilgeschnittene Seitenansicht einer erfindungsgemäßen Schraube,
- Fig. 2: eine Darstellung eines Einschraubvorgangs der Schraube in ein Bohrloch und
- Fig. 3: eine Darstellung der in das Bohrloch vollständig eingeschraubten Schraube.

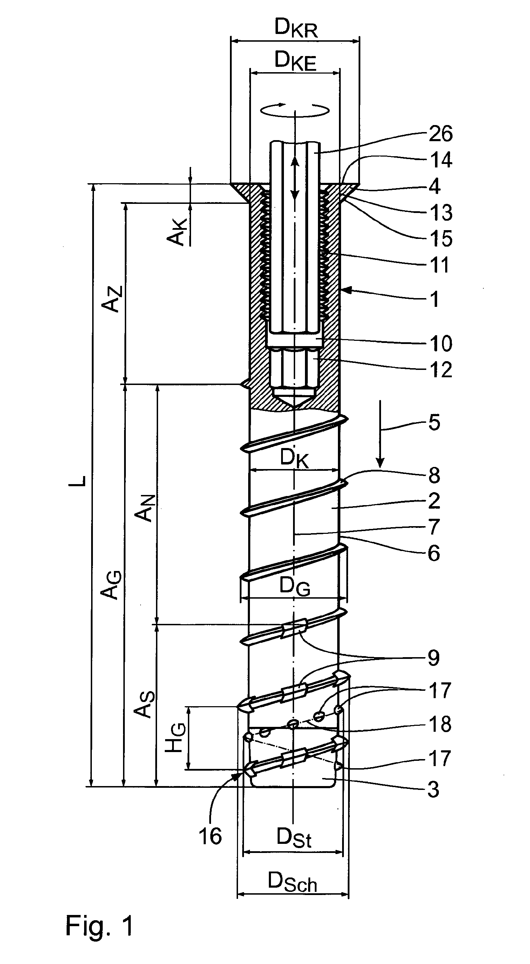

Im Folgenden wird unter Bezugnahme auf die Fig. 1 der Aufbau einer erfindungsgemäßen selbstzentrierenden Schraube 1 beschrieben. Die Schraube 1 ist zum Einschrauben in ein Bohrloch in einen harten Werkstoff, insbesondere, Beton mit einer Betonfestigkeit von mindestens C30 oder andere harte Natursteine, wie zum Beispiel Sandstein oder Granit, geeignet. Die Schraube 1 kann auch für weichere Werkstoffe eingesetzt werden.

Die Schraube 1 weist einen im Wesentlichen zylindrischen Kern 2 mit einem Einführende 3, einem diesen gegenüberliegenden Außenende 4, einer Einschraub-Richtung 5, einem Außenumfang 6 und einer parallel zur Einschraub-Richtung 5 verlaufenden Mittel-Längs-Achse 7 auf. Einstückig mit dem Kern 2 ist ein Außen-Gewinde 8 ausgebildet, das sich vom Einführende 3 entgegen der Richtung 5 entlang eines Gewinde-Abschnitts der Länge A_{G} erstreckt. Das Außen-Gewinde 8 ist entlang eines sich vom Einführende 3 entgegen der Einschraub-Richtung 5 erstreckenden Schneid-Abschnitts der Länge A_{S} selbstschneidend und weist hierfür mindestens ein Schneid-Element an dem Außen-Gewinde 8 auf. Der Kern 2 weist einen Kern-Durchmesser D_{K} und das Außen-Gewinde 8 einen Gewinde-Durchmesser D_{G} auf, wobei der Gewinde-Durchmesser D_{G} größer ist als der Kern-Durchmesser D_{K}.

An den Schneid-Abschnitt A_{S} schließt sich ein Normal-Gewinde-Abschnitt der Länge AN an, in dem keine Schneid-Elemente 9 an dem Außen-Gewinde 8 vorgesehen sind. Entsprechend gilt: A_{S} + AN = A_{G}. An den Gewinde-Abschnitt A_{G} schließt sich ein kreiszylindrischer Zylinder-Abschnitt der Länge A_{Z} an, der eine im Wesentlichen glatte Oberfläche aufweist. An den Zylinder-Abschnitt A_{Z} schließt sich ein sich bis zum Außenende 4 erstreckender Kragenabschnitt A_{K} an, der nachfolgend näher beschrieben ist. Der Kern 2 verjüngt sich ungefähr entlang der Höhe H_{G} eines Gewindegangs im Bereich des Einführendes 3 in der Form eines Kegelabschnitts. Die Gesamtlänge L der Schraube 1 setzt sich zusammen aus A_{G} + A_{Z} + A_{K}.

Im Bereich des Außenendes 4 ist ein konzentrisch zur Mittel-Längs-Achse 7 entgegen der Einschraub-Richtung 5 offenes Sackloch 10 angeordnet. Beginnend vom Außenende 4 weist das Sackloch 10 ein Innen-Gewinde 11 auf. Bei dem Innen-Gewinde 11 handelt es sich vorzugsweise um ein normales Metallgewinde. Das Innen-Gewinde 11 erstreckt sich nur über einen Teil, z.B. ¾ der Tiefe des Sacklochs 10. Das Innen-Gewinde 11 dient beispielsweise für ein Befestigungs-Element, das an der Schraube 1 einschraubbar ist. Somit ist es möglich, die Schraube 1 als BefestigungsAnker in einem harten Werkstoff wie beispielsweise Beton zu verwenden. In Richtung 5 hinter dem Innen-Gewinde 11 weist die Wand des Sacklochs 10 die Form eines Innen-Sechskants 12 auf, wobei der maximale InnenDurchmesser des Innen-Sechskants 12 kleiner ist als der InnenDurchmesser des Innen-Gewindes 11. Anstelle des Innen-Sechskants 12 können auch andere unrunde Querschnitte verwendet werden. Im Bereich des Außenendes 4 weist der Kern 2 einen gegenüber dem Kern 2 radial vorspringenden, einteilig mit dem Kern 2 ausgebildeten Kragen 13 auf. Der Kragen 13 weist entgegen der Richtung 5 eine ebene, senkrecht zur Achse 7 verlaufende Stirnfläche 14 auf. Die axiale Dicke des Kragens 13 reduziert sich mit zunehmendem radialen Abstand, d.h. der Kragen 13 wird begrenzt durch die Stirnfläche 14 und eine schräg zu dieser verlaufenden Flankenfläche 15, wobei sich beide unter einem spitzen Winkel schneiden. Es ist grundsätzlich möglich, den Querschnitt des Kragens 13 anders zu gestalten, z.B. scheibenförmig. Im Bereich des Außenendes 4 kann zum Eindrehen der Schraube 1 auch ein Sechskantkopf oder ein anderes Mittel zur Drehmomentübertragung angebracht sein.

Der Kragen 13 weist einen Außen-Durchmesser D_{KR} auf. Der Kern 2 weist einen Außen-Durchmesser D_{KE} auf. Es gilt: D_{KR} / D_{KE} ≥ 1,2, insbesondere ≥ 1,3, insbesondere ≥ 1,5.

Das Außen-Gewinde 8 weist einen Gewindeanfang 16 auf, der am Einführende 3 angeordnet ist. Weiterhin sind an dem Kern 2 mehrere Stützelemente 17 zum Abstützen der Schraube 1 in einem Bohrloch während eines Einschraubvorgangs vorgesehen. Die Stütz-Elemente 17 sind im Bereich des Gewindeanfangs 16 angeordnet und bezogen auf die Mittel-Längs-Achse 7 diametral gegenüberliegend zu den Schneid-Elementen 9 an dem Kern 2 angeordnet. Gemäß dem gezeigten Ausführungsbeispiel ist das Stütz-Element als aufgeschweißter Schneidstift ausgeführt. Es ist auch möglich, die Schneidstifte in Bohrungen an der Schraube 1, beispielsweise bei einer Edelstahlschraube, zu verankern. Für den Fall, dass die Stütz-Elemente 17 in Form der verankerten oder aufgeschweißten Schneidstifte ausgeführt sind, werden diese nach ihrer Anbringung an dem Kern 2 der Schraube 1 abschließend derart überschliffen, dass sie ein spitz zulaufendes Gewinde ausbilden. Es ist auch denkbar, auf die Schraube 1 ein spitz zulaufendes Zwischengewinde aufzuwalzen.

Die Stütz-Elemente 17 sind entlang einer Schraubenlinie 18 an dem Kern 2 angeordnet. Gemäß dem gezeigten Ausführungsbeispiel umfasst die Schraubenlinie 18 genau einen Gewindegang der Gewindehöhe H_{G}. Es ist auch möglich, dass die Schraubenlinie 18 höchstens 80% des Gewindegangs H_{G} und insbesondere höchstens 50% des Gewindegangs H_{G} umfasst. Dadurch, dass die Stütz-Elemente 17 jeweils genau einem Schneid-Element 9 zugeordnet und diesem diametral gegenüberliegend angeordnet sind, ist entsprechend die Schraubenlinie 18 insgesamt dem Außen-Gewinde 8 bezüglich der Mittel-Längs-Achse 7 diametral gegenüberliegend angeordnet. Entsprechend weisen die Schraubenlinie 18 und das Außen-Gewinde 8 identische Gewindesteigungen auf. Im Bereich der Schneid-Elemente 9 weist die Schraube 1 einen Schneid-Element-Durchmesser D_{Sch} auf, der größer ist als der Gewinde-Durchmesser D_{G}. Im Bereich der Stütz-Elemente 17 weist die Schraube einen Stütz-Element-Durchmesser D_{St} auf, der kleiner ist als der Gewinde-Durchmesser D_{G}. Der Innen-Sechskant 12 dient als Drehmoment-Übertragungs-Mittel zur Übertragung eines Einschraub-Drehmoments von einem Einschraub-Werkzeug 26 auf den Kern 2 zum Einschrauben desselben in den Werkstoff. Es ist auch möglich, das Drehmoment-Übertragungs-Mittel in einer anderen Form auszuführen, beispielsweise als einen auf den Kern 2 aufgesetzten, über den Kern-Durchmesser D_{K} hinausragenden Schraubenkopf mit beispielsweise einem Querschnitt in Form eines Außen-Sechskants. Andere, gängige Drehmoment-Übertragungs-Mittel sind ebenfalls möglich.

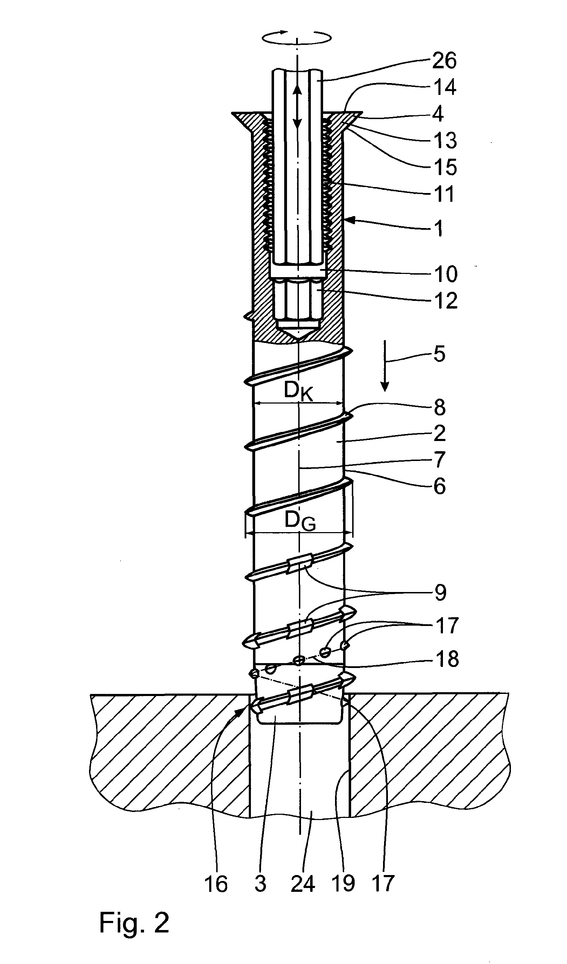

Im Folgenden wird anhand der Fig. 2 der Beginn eines Einschraubvorgangs der erfindungsgemäßen, selbstzentrierenden Schraube 1 in ein Bohrloch 24 näher erläutert. Zunächst wird die Schraube 1 in das Bohrloch 24 eingesetzt, wobei aufgrund des reduzierten Durchmessers der Schraube 1 am Einführende 3 die Schraube 1 zumindest teilweise in das Bohrloch 24 eindringt. Die Schraube 1 liegt mit den Schneid-Elementen 9, die entlang des Außen-Gewindes 8 innerhalb des Bohrlochs 24 angeordnet sind, an einer Innenwand 19 des Bohrlochs 24 an, ohne dass ein Schneidvorgang stattfindet. Durch Drehen der Schraube 1 mit einem Einschraub-Werkzeug 26 entlang der Einschraub-Richtung 5 wird der Kern 2 auf der dem zuerst in die Innenwand 19 des Bohrlochs 24 eingreifenden Schneidelements 9 gegenüberliegenden Seite des Kerns 2 gegen die Innenwand 19 gepresst. Das Stütz-Element 17 bewirkt dementsprechend eine Abstützung der Schraube 1 in dem Bohrloch 24 und verhindert, dass die Schraube 1 infolge des Eingriffs des Schneid-Elements 9 mit der Innenwand 19 des Bohrlochs 24 um die Mittel-Längs-Achse 7 der Schraube 1 kippt. Somit wird eine Beschädigung der Schraube 1 und ein Ausfräsen des Bohrlochs 24 vermieden. Die Schraube 1 ist somit durch das Stütz-Element 17 sicher in dem Bohrloch 24 abgestützt und insbesondere während des Einschraubbeginns sicher geführt und zentriert. Die Stütz-Elemente 17 wirken also als Zentrier- und Einschraubhilfe. Es gibt für das Einschrauben in Beton geeignete Schrauben 1, die keine Schneidzähne aufweisen bzw. eingewalzte Schneidzähne besitzen. Auch bei diesen funktioniert der oben erläuterte Beginn des Einschraubvorgangs gleichermaßen, solange die als Zentrierhilfe wirkenden Stütz-Elemente 17 gegenüber der ersten Gewinde-Steigung liegen.

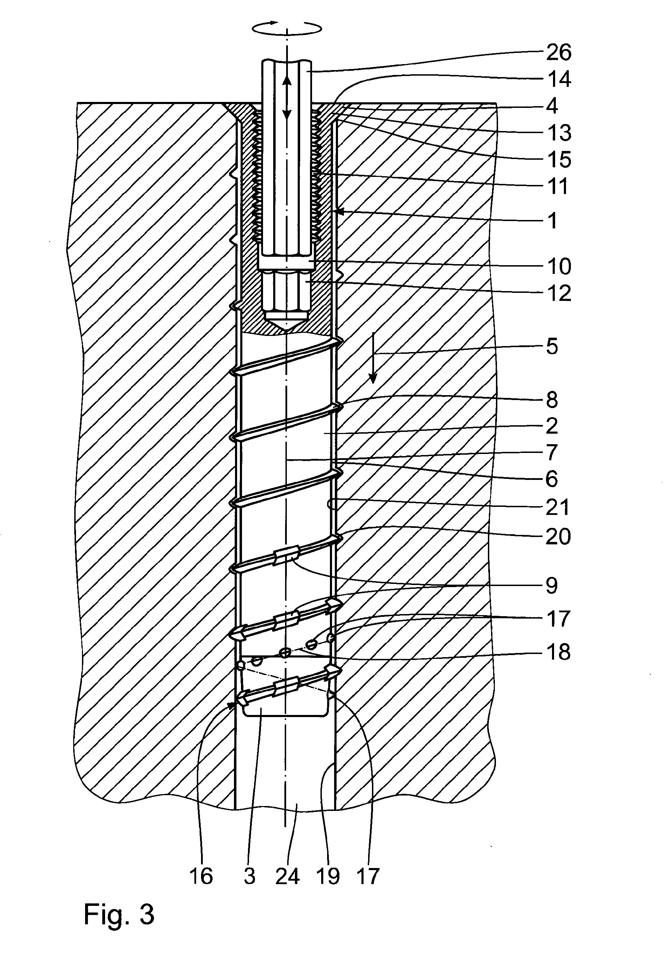

Im Folgenden wird anhand der Fig. 3 der Einschraubvorgang für die vollständig in das Bohrloch 24 eingeschraubte Schraube 1 näher beschrieben. Ausgehend von der Darstellung in Fig. 2 wird die Schraube 1 mit dem Einschraub-Werkzeug 26 entlang der Einschraub-Richtung 5 weiter in das Bohrloch 24 eingeschraubt. Dabei ist in die Innenwand 19 des Bohrlochs 24 durch die Schneid-Elemente 9 ein als Innen-Gewinde ausgebildetes Trag-Gewinde 20 eingeschnitten. Das Trag-Gewinde 20 dient der Befestigung der Schraube 1 in dem Bohrloch 24, in dem das Außen-Gewinde 8 in dem Trag-Gewinde 20 angeordnet ist. Der entlang der Innenwand 19 zwischen dem Trag-Gewinde 20 verbleibende, schraubenlinienförmige Steg 21 ist ebenso wie das Trag-Gewinde 20 trotz der am Kern 2 vorgesehenen Stütz-Elemente 17 unbeschädigt, sodass die Tragfähigkeit der Schraubverbindung der Schraube 1 in dem Bohrloch 24 gegenüber einer Schraube ohne Stütz-Elemente 17 nicht beeinträchtigt ist. Der Grund hierfür ist, dass der Stütz-Element-Durchmesser D_{St} kleiner ist als der Gewinde-Durchmesser D_{G} und somit, nachdem die Schraube 1 sich nach dem Einschraubvorgang mittels der Stütz-Elemente 17 und der Schneid-Elemente 9 selbst zentriert und in das Bohrloch 24 eingeschnitten hat, die Stütz-Elemente 17 keine Schneidarbeit an der Innenwand 19 leisten.

## Patentansprüche

1. Selbstzentrierende Schraube zum Einschrauben in ein Bohrloch in einen harten Werkstoff, insbesondere Beton, wobei die Schraube (1) umfasst
a. einen zylindrischen Kern (2) mit
i. einem Einführende (3),
ii. einem diesem gegenüberliegenden Außenende (4),
iii. einem Kern-Durchmesser (D_{K}),
iv. einer Einschraub-Richtung (5) und
v. einer dazu parallelen Mittel-Längs-Achse (7),
b. ein einstückig mit dem Kern (2) ausgebildetes, sich entlang eines Gewinde-Abschnitts (A_{G}) erstreckendes Außen-Gewinde (8) zum Einschrauben desselben in den Werkstoff mit
i. einem Gewinde-Durchmesser (D_{G}),
ii. einem am Einführende (3) angeordneten Gewindeanfang (16) und
iii. mindestens ein Schneid-Element (9) zum Einschneiden des Außen-Gewindes (8) in den Werkstoff,
c. ein am Kern (2) angeordnetes Drehmoment-Übertragungs-Mittel (12) zur Übertragung eines Einschraub-Drehmoments von einem Einschraub-Werkzeug (26) auf den Kern (2) zum Einschrauben desselben in den Werkstoff und
d. mindestens ein Stütz-Element (17) zum Abstützen der Schraube (1) in dem Bohrloch (24) während des Einschraubens,
wobei das mindestens eine Stütz-Element (17) im Bereich des Gewindeanfangs (16) und bezogen auf die Mittel-Längs-Achse (7) dem mindestens einen Schneid-Element (9) im Wesentlichen gegenüberliegend, insbesondere diametral gegenüberliegend, an dem Kern (2) angeordnet ist,
**dadurch gekennzeichnet, dass** das mindestens eine Stütz-Element (17) eine andere Materialzusammensetzung aufweist als der Kern (2) und/oder als das Außengewinde.

2. Schraube gemäß Anspruch 1, **dadurch gekennzeichnet, dass** das mindestens eine Stütz-Element (17) als eine von dem Kern (2) hervorstehende Erhebung, insbesondere als aufgeschweißte Erhebung oder Schneidstift, ausgeführt ist.

3. Schraube gemäß einem der vorstehenden Ansprüche, **gekennzeichnet durch** mehrere, am Kern (2) entlang einer Schraubenlinie (18) angeordnete Stütz-Elemente (17).

4. Schraube gemäß Anspruch 3, **dadurch gekennzeichnet, dass** die Schraubenlinie (18) höchstens einen Gewindegang (H_{G}), insbesondere höchstens 80% des Gewindegangs (H_{G}) und insbesondere höchstens 50% des Gewindegangs (H_{G})umfasst.

5. Schraube gemäß Anspruch 3 oder 4, **dadurch gekennzeichnet, dass** die Schraubenlinie (18) und das Außen-Gewinde (8) bezüglich der Mittel-Längs-Achse (7) diametral gegenüberliegend angeordnet sind.

6. Schraube gemäß einem der Ansprüche 3 bis 5, **dadurch gekennzeichnet, dass** die Schraubenlinie (18) und das Außen-Gewinde (8) identische Gewindesteigungen aufweisen.

7. Schraube gemäß einem der vorstehenden Ansprüche, **gekennzeichnet durch** einen Schneid-Element-Durchmesser (D_{Sch}), der größer ist als der Gewinde-Durchmesser (D_{G}).

8. Schraube gemäß Anspruch 5 **gekennzeichnet durch** einen Stütz-Element-Durchmesser (D_{St}), der kleiner ist als der Gewinde-Durchmesser (D_{G}).

9. Schraube gemäß einem der Ansprüche 1 oder 2, **dadurch gekennzeichnet, dass** mindestens ein Stütz-Element (17) stegförmig, insbesondere in Form eines Gewindeabschnitts ausgebildet ist.

10. Schraube gemäß einem der Ansprüche 1 oder 2, **dadurch gekennzeichnet, dass** die Höhe des mindestens einen Stütz-Elements (17) gegenüber dem Kern (2) kleiner gleich, insbesondere kleiner, insbesondere 10%, insbesondere 20%, insbesondere 30% kleiner als die Höhe des Außen-Gewindes (8) gegenüber dem Kern (2) ist.

11. Schraube gemäß einem der Ansprüche 1 oder 2, **dadurch gekennzeichnet, dass** gesehen vom Einführende (3) entlang der Mittel-Längs-Achse (7) das erste Stütz-Element (17) vom Einführende (3) ungefähr denselben Abstand hat wie der Gewindeanfang (16).

12. Schraube gemäß Anspruch 1 oder 2, **dadurch gekennzeichnet, dass** das mindestens eine Stütz-Element (17) in der Form als Gewindeabschnitt ausgebildet ist mit einem angularen Winkel bezogen auf die Mittel-Längs-Achse (7) größer gleich 45°, insbesondere größer gleich 90°, insbesondere größer gleich 120°, insbesondere größer gleich 180°.

## Claims

1. Self-centring screw for screwing into a borehole in a hard material, in particular concrete, the screw (1) comprising
a. a cylindrical core (2) with
i. an insertion end (3),
ii. an outer end (4) opposite the latter,
iii. a core diameter (D_{K}),
iv. a screwing-in direction (5) and
v. a central longitudinal axis (7) parallel thereto,
b. an external thread (8) designed in one piece with the core (2) and extending along a thread section (A_{G}) for screwing the latter into the material comprising
i. a thread diameter (D_{G}),
ii. a first part of the thread (16) arranged at the insertion end (3) and
iii. at least one cutting element (9) for cutting the external thread (8) into the material,
c. a torque-transmitting means (12) arranged on the core (2) for transmitting a screwing-in torque from a screwing tool (26) to the core (2) for screwing the latter into the material and
d. at least one support element (17) for supporting the screw (1) in the borehole (24) during the screwing in,
wherein the at least one support element (17) is arranged on the core (2) in the region of the first part of the thread (16) and relative to the central longitudinal axis (7) essentially opposite the at least one cutting element (9), in particular diametrically opposite,
**characterised in that** the at least one support element (17) has a different material composition than the core (2) and/or the external thread.

2. Screw according to claim 1, **characterised in that** the at least one support element (17) is configured as an elevation protruding from the core (2), in particular as a welded on elevation or cutting pin.

3. Screw according to one of the preceding claims, **characterised by** a plurality of support elements (17) arranged on the core (2) along a helical path (18).

4. Screw according to claim 3, **characterised in that** the helical path (18) comprises at most a thread (H_{G}), in particular at most 80% of the thread (H_{G}) and in particular at most 50% of the thread (H_{G}).

5. Screw according to claim 3 or 4, **characterised in that** the helical path (18) and the external thread (8) are arranged diametrically opposite one another relative to the central longitudinal axis (7).

6. Screw according to one of claims 3 to 5, **characterised in that** the helical path (18) and the external thread (8) have identical thread pitches.

7. Screw according to one of the preceding claims, **characterised by** a cutting element diameter (D_{Sch}) which is greater than the thread diameter (D_{G}).

8. Screw according to claim 5, **characterised by** a support element diameter (D_{St}) which is smaller than the thread diameter (D_{G}).

9. Screw according to one of claims 1 or 2, **characterised in that** at least one support element (17) is designed to be web-like, in particular in the form of a threaded section.

10. Screw according to one of claims 1 or 2, **characterised in that** the height of the at least one support element (17) relative to the core (2) is smaller or equal to, in particular smaller, in particular 10%, in particular 20%, in particular 30% smaller than the height of the external thread (8) relative to the core (2).

11. Screw according to one of claims 1 or 2, **characterised in that** as viewed from the insertion end (3) along the central longitudinal axis (7) the first support element (17) has approximately the same distance from the insertion end (3) as the first part of the thread (16).

12. Screw according to claim 1 or 2, **characterised in that** the at least one support element (17) is designed in the form of a threaded section with an angle relative to the central longitudinal axis (7), which is larger or equal to 45°, in particular larger or equal to 90°, in particular larger or equal to 120°, in particular larger or equal to 180°.

## Revendications

1. Vis autocentreuse destinée à être vissée dans un alésage dans un matériau dur, notamment du béton, la vis (1) comprenant
a. un corps (2) cylindrique comportant
i. une extrémité d'insertion (3),
ii. une extrémité de sortie (4) qui lui est oppposée,
iii. un diamètre de corps (D_{K}),
iv. un sens de vissage (5) et
v. un axe central longitudinal (7) qui lui est parallèle,
b. un filetage externe (8) s'étendant le long d'une portion de filetage (A_{G}) formé en constituant une pièce unique avec le corps (2), destiné au vissage de celui-ci dans le matériau, comportant
i. un diamètre de filetage (D_{G}),
ii. un début de filetage (16) agencé à l'extrémité d'insertion (3)
et
iii. au moins un élément coupant (9) destiné à inciser le filetage externe (8) dans le matériau,
c. un moyen de transmission (12) du moment de rotation disposé sur le corps (2) destiné à transmettre un moment de rotation d'insertion à partir d'un outil d'insertion (26) sur le corps (2) pour le vissage de celui-ci dans le matériau, et
d. au moins un élément de maintien (17) destiné au maintien de la vis (1) dans l'alésage (24) pendant le vissage,
au moins l'élément de maintien (17) étant disposé dans la zone du début de filetage (16) sur le corps (2), et étant disposé dans l'ensemble opposé, notamment diamétralement opposé, à au moins un élément coupant (9) par rapport à l'axe central longitudinal (7),
**caractérisée en ce qu'**au moins un élément de maintien (17) présente une autre composition de matière que le corps (2) et/ou que le filetage externe.

2. Vis selon la revendication 1, **caractérisée en ce qu'**au moins un élément de maintien (17) est conçu sous la forme d'une surélévation dépassant du corps (2), notamment une surélévation soudée ou une pointe coupante.

3. Vis selon l'une des revendications précédentes, **caractérisée par** plusieurs éléments de maintien (17) disposés sur le corps (2) le long d'une hélice (18).

4. Vis selon la revendication 3, **caractérisée en ce que** l'hélice (18) comprend au maximum un pas de filetage (H_{G}), en particulier, au maximum 80 % du pas de filetage (H_{G}) et particulièrement 50 % du pas de filetage (H_{G}).

5. Vis selon les revendications 3 ou 4, **caractérisée en ce que** l'hélice (18) et le filetage externe (8) sont disposés diamétralement oppposés par rapport à l'axe central longitudinal (7).

6. Vis selon l'une des revendications 3 à 5, **caractérisée en ce que** l'hélice (18) et le filetage externe (8) présentent des pas de filetage identiques.

7. Vis selon l'une des revendications précédentes, **caractérisée par** un diamètre (D_{Sch}) d'élément coupant qui est supérieur au diamètre (D_{G}) du filetage.

8. Vis selon la revendication 5, **caractérisée par** un diamètre (D_{St}) d'élément de maintien qui est inférieur au diamètre (D_{G}) de filetage.

9. Vis selon l'une des revendications 1 ou 2, **caractérisée en ce qu'**au moins un élément de maintien (17) est conçu en forme d'une échelle, en particulier, sous forme d'une portion de filetage.

10. Vis selon l'une des revendications 1 ou 2, **caractérisée en ce que** la hauteur d'au moins un élément de maintien (17) est inférieure ou égale par rapport au corps (2), notamment inférieure, notamment inférieure de 10 %, notamment de 20 %, notamment de 30 % à la hauteur du filetage externe (8) par rapport au corps (2).

11. Vis selon l'une des revendications 1 ou 2, **caractérisée en ce que** le premier élément de maintien (17) possède environ la même distance jusqu'à l'extrémité d'insertion (3), vu à partir de l'extrémité d'insertion (3) le long de l'axe central longitudinal (7), que le début du filetage (16).

12. Vis selon les revendications 1 ou 2, **caractérisée en ce qu'**au moins un élément de maitien (17) est conçu sous la forme d'une portion de filetage comprenant une mesure angulaire par rapport à l'axe central longitudinal (7) supérieure ou égale, notamment supérieure ou égale à 90 °, notamment supérieure ou égale à 120 °, notamment supérieur ou égale à 180 °.
